# EUROPEAN PATENT APPLICATION

(11) **EP 3 549 787 A1**
(43) Date of publication of application: **09.10.2019**
(21) Application number: 17876635.8
(22) Date of filing: 01.11.2017
(51) Int. Cl.: B60C 9/18, B60C 9/00

(54) **RUBBER CORD COMPOSITE, REINFORCING MEMBER FOR TIRES, AND TIRE USING SAME**

(30) Priority: 30.11.2016 JP 2016232144
(71) Applicant: Bridgestone Corporation, Tokyo 104-8340 (JP)
(72) Inventor: SASAKI Yosuke, Tokyo 104-8340 (JP)
(74) Representative: Oxley, Robin John George
(86) International application number: PCT/JP2017/039602
(87) International publication number: WO 2018/100960

(57) **Abstract**

Provided is a rubber-cord composite, a tire reinforcing member, and a tire using the same, which can further improve the strength and modulus of an entire belt layer without causing a problem caused by the reinforcing cord and can further improve the durability of the tire than before. Provided is a rubber-cord composite used for a spiral cord layer in a tire reinforcing member including a core cord layer 2 and a spiral cord layer 3. One or a plurality of reinforcing cords 3a are aligned in parallel and covered with rubber. The reinforcing cord includes a nonmetallic fiber. When the modulus of the reinforcing cord is A, the number of cord end counts is B, the thickness of the reinforcing cord is C, the specific gravity of the reinforcing cord is D, the number of upper twists of the reinforcing cord is E, and the total fineness of the reinforcing cord is F, a modulus X represented by X = A × B is 1,000 GPa or more, a cord interval Y represented by Y = (50 - B × C) / B is from 0.1 mm to 5 mm, and a twist coefficient Z represented by Z = tan θ = E × √ (0.125 × F / D) / 1,000 is 0.3 or less.

## Description

### TECHNICAL FIELD

The present invention relates to improvements of a rubber-cord composite (hereinafter, also simply referred to as "composite"), a tire reinforcing member (hereinafter, also simply referred to as "reinforcing member"), and a tire using the same.

### BACKGROUND ART

Conventionally, a variety of studies have been made on tire reinforcing members. For example, a belt, which is a reinforcing member for a passenger car tire, generally has a structure in which two or more belt-crossing layers in which cord directions of reinforcing cords cross each other are arranged on the outer side in the tire radial direction of a crown portion of a carcass serving as a framework member. As another structure of a belt, there is known a structure in which two upper and lower belt layers are arranged such that organic fiber cords as reinforcing cords cross each other, and at the same time, the organic fiber cord is turned up at an edge of the belt layer so as to form a spirally winding structure extending from one belt layer to the other belt layer, and a steel belt layer in which reinforcing cords composed of steel cords are arrayed is arranged between these belt layers having organic fiber cords.

Regarding such a structure, for example, Patent Documents 1 and 2 propose a pneumatic radial tire which improves edge separation resistance of a belt layer of a passenger car pneumatic tire by defining the orientation angle of a reinforcing cord of a steel belt layer with respect to the circumferential direction of the tire to improve other performances of the tire.

### RELATED ART DOCUMENTS

### PATENT DOCUMENTS

PATENT DOCUMENT 1: Jpanese Unexamined Patent Application Publication No. H10-109502
PATENT DOCUMENT 2: Japanese Unexamined Patent Application Publication No. H10-109503

### SUMMARY OF THE INVENTION

### PROBLEMS TO BE SOLVED BY THE INVENTION

Since belts proposed in Patent Documents 1 and 2 have a structure of a three-layer belt formed by spirally winding a reinforcing member composed of an organic fiber cord around a steel belt layer, it is thought that a certain level of durability can be secured while achieving weight saving. However, since a reinforcing cord other than a metal cord such as a steel cord is used for the spiral cord layer, the strength and the modulus of the entire belt layer are reduced as compared with the case of using a crossing layer of two layers of steel belt layers, which is insufficient in terms of suppressing the diameter growth and distortion of a tire during traveling.

To counter this problem, it is conceivable to use a cord having a relatively large cord diameter as the reinforcing cord of the spiral cord layer in order to further improve the durability. On the other hand, in order to maintain the shape of the belt layer, a certain number of end counts are needed, and when the number of end counts is increased while increasing the cord diameter, a spacing between cords in the spiral cord layer becomes too narrow, resulting in localized heat generation due to concentration of distortion and fretting due to rubbing between the cords, which may lower the durability. Therefore, there has been a demand for establishment of a technique capable of further improving the durability of a tire by improving the strength and modulus of the entire belt layer without causing problems caused by reinforcing cords such as fretting.

Accordingly, an object of the present invention is to provide a rubber-cord composite, a tire reinforcing member, and a tire using the same, which can further improve the strength and modulus of an entire belt layer without causing a problem caused by the reinforcing cord and can further improve the durability of the tire than before.

### MEANS FOR SOLVING THE PROBLEMS

In order to solve the above problems, the present inventor intensively studied to find that the above problems can be solved by defining the modulus of a rubber-cord composite itself, the cord interval in the rubber-cord composite, and the twist coefficient of a reinforcing cord used in the rubber-cord composite respectively within specific ranges.

Specifically, the rubber-cord composite of the present invention is a rubber-cord composite used for a spiral cord layer in a tire reinforcing member comprising at least one core cord layer and the spiral cord layer including a reinforcing cord spirally wound around the core cord layer, characterized in that
one or a plurality of the reinforcing cords are aligned in parallel and covered with rubber,
the reinforcing cord includes a nonmetallic fiber,
when the modulus per cord of the reinforcing cord is A (GPa), the number of cord end counts per 50 mm width of the rubber-cord composite is B (/50 mm), the thickness of the reinforcing cord is C (mm), the specific gravity of the reinforcing cord is D (g/cm³), the number of upper twists of the reinforcing cord is E (times/10 cm), and the total fineness of the reinforcing cord is F (dtex),
the modulus X per 50 mm width of the rubber-cord composite represented by X = A × B is 1,000 GPa or more,
a cord interval Y between the adjacent reinforcing cords in the rubber-cord composite in a direction perpendicular to the cord longitudinal direction represented by Y = (50 - B × C) / B is from 0.1 mm to 5 mm, and
the twist coefficient Z of the reinforcing cord represented by Z = tan θ = E × √ (0.125 × F / D) / 1,000 is 0.3 or less.

In the present invention, the total fineness F of the reinforcing cord is preferably from 1,000 dtex to 30,000 dtex, more preferably from 5,000 dtex to 30,000 dtex, and further preferably from 9,000 dtex to 30,000 dtex.

In the present invention, the nonmetallic fiber is preferably one or more selected from aramid fiber, polyketone fiber, polyparaphenylene benzobisoxazole fiber, polyarylate fiber, basalt fiber, carbon fiber, and glass fiber, and particularly preferably, the nonmetallic fiber is one or both of carbon fiber and glass fiber.

Further, in the present invention, the modulus X is preferably from 2,000 GPa to 6,000 GPa. Still further, in the present invention, the bending stress per 50 mm width of an unvulcanized rubber-cord composite measured by a three-point bending test in accordance with JIS K7074 is preferably from 0.1 N to 80 N.

The tire reinforcing member of the present invention is a tire reinforcing member comprising at least one core cord layer and a spiral cord layer including a reinforcing cord wound spirally around the core cord layer, characterized in that
the spiral cord layer is formed using the rubber-cord composite.

In the reinforcing member of the present invention, preferably, the core cord of the core cord layer is composed of a metal cord, and the core cord has an inclination angle of from 40 to 90° with respect to the longitudinal direction of the core cord layer.

In the present invention, preferably, the thickness of the core cord layer is from 1 to 3 mm.

The tire of the present invention is characterized in that the above-described tire reinforcing member is used.

### EFFECTS OF THE INVENTION

According to the present invention, a rubber-cord composite, a tire reinforcing member, and a tire using the same, which can further improve the strength and modulus of an entire belt layer without causing a problem caused by the reinforcing cord and can further improve the durability of the tire than before can be realized.

### BRIEF DESCRIPTION OF THE DRAWINGS

FIG. 1 is a cross-sectional view in the width direction of a tire reinforcing member according to one preferred embodiment of the present invention.
FIG. 2 is a schematic plan view showing reinforcing cord angles of a tire reinforcing member according to one preferred embodiment of the present invention.
FIG. 3 is a cross-sectional view showing a cross-section of a rubber-cord composite in a direction perpendicular to the cord longitudinal direction.
FIG. 4 is a cross-sectional view in the tire width direction showing one configuration example of a passenger car tire.
FIG. 5 is a partial cross-sectional view in the tire width direction of a tread portion of a passenger car tire of the present invention.
FIG. 6 is a cross-sectional view in the tire width direction showing one configuration example of a truck/bus tire.
FIG. 7 is a partial cross-sectional view in the tire width direction of a tread portion of a truck/bus tire of the present invention.
FIG. 8 is a cross-sectional view in the tire width direction showing one configuration example of a construction vehicle tire.
FIG. 9 is a partial cross-sectional view in the tire width direction of a tread portion of a construction vehicle tire of the present invention.
FIG. 10 is an explanatory view showing a method of measuring a bending stress of a rubber-cord composite in Example.

### MODE FOR CARRYING OUT THE INVENTION

Hereinafter, the present invention will be described in detail with reference to the drawings.

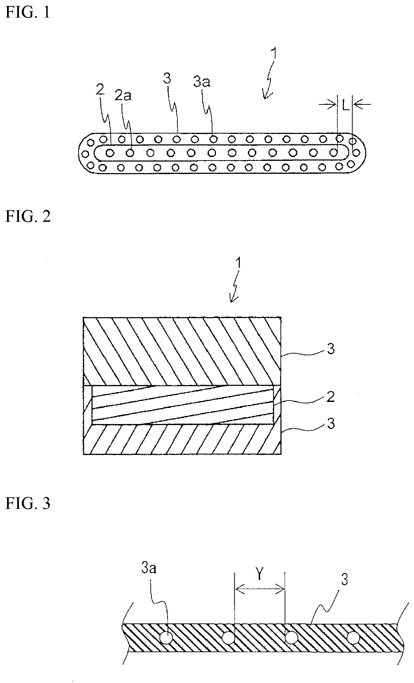

FIGs. 1 and 2 are a cross-sectional view in the width direction and a schematic plan view of a tire reinforcing member according to a preferred embodiment of the present invention. The tire reinforcing member 1 of the present invention comprises at least one core cord layer 2 and a spiral cord layer 3 including a reinforcing cord 3a spirally wound around the core cord layer 2. Here, the core cord layer 2 is manufactured by aligning a large number of core cords 2a in parallel, arranging unvulcanized rubber above and below the core cords 2a, and rubber-coating the core cord 2a. The core cord layer 2 is one layer in the illustrated reinforcing member of the present invention, but it may be layered in a plurality of layers, for example, 2 to 10 layers.

The rubber-cord composite of the present invention is used for the spiral cord layer 3, and one or a plurality, for example, from 2 to 100 of the above-described reinforcing cords 3a are aligned in parallel, and covered with rubber. In the present invention, the spiral cord layer 3 is formed by spirally winding the rubber-cord composite of the present invention around the core cord layer 2.

In the present invention, as the reinforcing cord 3a of the rubber-cord composite, one containing a nonmetallic fiber is used. Specific examples of the nonmetallic fiber include organic fiber, carbon fiber (CF), glass fiber, and rock fiber (rock wool). Suitable examples of the organic fiber include aramid fiber (aromatic polyamide fiber), polyketone (PK) fiber, polyparaphenylene benzobisoxazole (PBO) fiber, and polyarylate fiber. Examples of the carbon fiber include polyacrylonitrile (PAN) type carbon fiber, pitch type carbon fiber, and rayon type carbon fiber. Examples of the rock fiber include basalt fiber and andesite fiber. In the present invention, since any reinforcing cord may be used as long as it contains such a nonmetallic fiber, a cord composed of any one of these nonmetallic fibers or a hybrid cord composed of any two or more kinds can be used, and a cord composed of a hybrid fiber of a nonmetallic fiber and a metal fiber such as an organic fiber partially including a metal fiber can also be used. The nonmetallic fiber is preferably contained in the reinforcing cord in an amount of 50% by volume or more, particularly 80% by volume or more, and most preferably, a reinforcing cord consisting solely of a nonmetallic fiber is used. Among them, as the nonmetallic fiber, any one or more selected from aramid fiber, polyketone fiber, PBO fiber, polyarylate fiber, basalt fiber, carbon fiber and glass fiber can be suitably used, and a cord composed of any one of them, or a hybrid cord composed of any two or more of them can be used as a reinforcing cord. In particular, it is preferable, by using either one or both of carbon fiber and glass fiber as the nonmetallic fiber, to use a cord composed of either one of them or a hybrid cord composed of both of them as a reinforcing cord. In particular, carbon fibers are preferable since they have a small specific gravity and high rigidity, which can attain reduction in weight and rigidity at the same time. Preferably, these reinforcing cords 3a are subjected to an adhesive treatment to improve the adhesion to rubber. This adhesive treatment can be carried out in accordance with a conventional manner using a general-purpose adhesive such as RFL adhesive.

In the present invention, it is important, when the modulus per cord of the reinforcing cord 3a is A (GPa), the number of cord end counts per 50 mm width of the rubber-cord composite is B (/50 mm), the thickness of the reinforcing cord 3a is C (mm), the specific gravity of the reinforcing cord 3a is D (g/cm³), the number of upper twists of the reinforcing cord 3a is E (times/10 cm), and the total fineness of the reinforcing cord 3a is F (dtex), to satisfy the following relationship. Here, in the present invention, the thickness C of the reinforcing cord 3a is the thickness (cord diameter) as the dipped cord after the adhesive treatment. In the present invention, the thickness C and the total fineness F of the reinforcing cord 3a can be measured in accordance with JIS L 1017.

First, in the present invention, the modulus X per 50 mm width of the rubber-cord composite represented by X = A × B is 1,000 GPa or more. By defining the modulus X as the rubber-cord composite within the above range, the reinforcing member 1 having a modulus higher than the conventional one can be obtained, and sufficient tensile rigidity as a substitute for the steel belt can be secured and the shape retention effect of a tire at the time of filling the internal pressure can be improved, contributing to improvement in durability performance and reduction in loss of the tire. The modulus X (GPa) is preferably from 2,000 GPa to 6,000 GPa, and more preferably from 2,500 GPa to 3,500 GPa.

Here, in the present invention, the modulus is calculated in accordance with the "initial tensile resistance" test method described in JIS L1013 or JIS L1017.

In the present invention, the cord interval Y (mm) in the direction orthogonal to the longitudinal direction of the cord between adjacent reinforcing cords 3a in the rubber-cord composite represented by Y = (50 - B × C) / B is from 0.1 mm to 5 mm. FIG. 3 is a cross-sectional view showing a cross-section of the rubber-cord composite in the direction perpendicular to the longitudinal direction of the cord.

As described above, when the interval between the reinforcing cords 3a in the layer becomes too small, the durability may be deteriorated due to local heat generation, fretting, or the like. In the present invention, however, by defining the cord interval specified by the relationship between the number of end counts and the cord diameter within the above range, even when the cord diameter of a tire of any tire size is increased, the durability is not deteriorated due to this. The cord interval Y (mm) is preferably from 0.2 mm to 5 mm, and more preferably from 0.3 mm to 5 mm.

In the present invention, when the modulus X and the cord interval Y satisfy the above ranges, respectively, a rubber-cord composite having a desired modulus, and further a spiral cord layer 3 can be realized while ensuring necessary and sufficient durability.

Further, in the present invention, the twist coefficient Z of the reinforcing cord 3a, which is expressed by Z = tan θ = E × √ (0.125 × F / D) / 1,000, is 0.3 or less. By reducing the twist coefficient Z to the above range, high cord rigidity of the reinforcing cord 3a can be secured without deteriorating the workability at the time of turning-up, and in addition to the above effects, a high performance rubber-cord composite, and a tire reinforcing member and a tire using the rubber-cord composite can be obtained.

In the present invention, the modulus A per cord of the reinforcing cord 3a, the number B of cord end counts per 50 mm width of rubber-cord composite, the thickness C of the reinforcing cord 3a, the specific gravity D of the reinforcing cords 3a, and the number of upper twists E of the reinforcing cord 3a are not particularly limited as long as they satisfy the above-described conditions, and can be selected as desired.

The total fineness F of the reinforcing cord 3a is preferably from 1,000 dtex to 30,000 dtex, more preferably from 5,000 dtex to 30,000 dtex, and further preferably from 9,000 dtex to 30,000 dtex. Although the total fineness F of the reinforcing cord 3a is preferably as high as possible from the viewpoint of ensuring the tire rigidity, when it is too high, the thickness of the member increases with increasing cord diameter, making it difficult to bend, deteriorating the rolling resistance as well as deteriorating the winding workability of strip (rubber-cord composite) at the time of tire molding.

Further, in the present invention, the bending stress (stiffness) per 50 mm width of the unvulcanized rubber-cord composite measured by 3-point bending test in accordance with JIS K7074 is preferably from 0.1 N to 80 N, and more preferably from 0.1 N to 30 N. By setting the stiffness of the rubber-cord composite per 50 mm width to the above range, the winding performance of the strip to the core cord layer can be sufficiently secured.

In the reinforcing member 1 of the present invention, since the spiral cord layer 3 is formed by using the rubber-cord composite, when applied to a tire, the strength and modulus of the entire belt layer can be improved without causing a problem due to a reinforcing cord, and the durability of the tire can be further improved as compared with a conventional tire. In the reinforcing member 1 of the present invention, it is only important to use the rubber-cord composite for the spiral cord layer 3 spirally wound around the core cord layer 2, and there is no particular limitation on the other configurations.

In the present invention, the core cord 2a of the core cord layer 2 can have an inclination angle of from 40 to 90° with respect to the longitudinal direction of the core cord layer 2. By setting the angle of the core cord 2a within the above range, the tension of the core cord 2a decreases and the allowance until the core cord 2a breaks increases. As a result, even when an obstacle is input, the core cord 2a is not easily broken. In order to favorably obtain such an effect, the inclination angle of the core cord 2a of the core cord layer 2 is more preferably from 50 to 90° with respect to the longitudinal direction of the core cord layer 2. When a plurality of core cord layers 2 are provided, the core cord layers 2 of a plurality of layers may constitute a intersecting belt layer.

Here, in the reinforcing member 1 of the present invention, since the rigidity of the core cord layer 2 in the longitudinal direction is not high, the layer easily stretches in the longitudinal direction. However, when the core cord 2a of the core cord layer 2 has an angle of from 40 to 90° with respect to the longitudinal direction, considering the entire reinforcing member 1, the Poisson deformation of the spiral cord layer 3 (deformation caused by a symmetrical intersecting layer which shrinks by 7 in the width direction with respect to the elongation 1 in the longitudinal direction) is suppressed by the core layer 2. In other words, in the reinforcing member 1 of the present invention, when the core cord 2a of the core cord layer 2 has an angle of from 40 to 90° with respect to the longitudinal direction, the core cord layer 2 functions as a prop for deformation that shrinks in the width direction due to Poisson deformation. As a result, elongation in the longitudinal direction of the reinforcing member 1 is suppressed, and the rigidity in the longitudinal direction is improved. As the Poisson deformation is suppressed, the rigidity in the longitudinal direction is improved, and at the same time, the shrinkage deformation in the width direction is also suppressed, so that the rigidity in the width direction is also improved. As described above, one or more pairs of reinforcing layers intersecting with each other at a low angle with respect to the tire circumferential direction are elongated in the circumferential direction by the internal pressure filling, and accordingly the layer shrinks in the tire width direction, suppression of this shrinkage deformation by arranging a reinforcing layer at a high angle is hereinafter referred to as a prop effect.

In the reinforcing member 1 of the present invention, the reinforcing cord 3a of the spiral cord layer 3 preferably has an inclination angle of from 10 to 45° with respect to the longitudinal direction of the core cord layer 2. By adopting such a configuration, elongation of the reinforcing member 1 in the longitudinal direction can be further suppressed. This angle is preferably from 15 to 30°.

In the reinforcing member 1 of the present invention, as the core cord 2a used for the core cord layer 2, a metal cord can be used. As the metal cord, preferably, steel filaments or steel cords obtained by twisting a plurality of steel filaments can be used from a viewpoint of cost and strength. In particular, in order to obtain a favorable prop effect, preferably, the compression rigidity in the width direction is large. Therefore, preferably, a twisted cord rather than a monofilament cord is used. A variety of designs are also possible for the twist structure of the steel cord, and a variety of cross-sectional structures, twist pitches, twist directions, and distances between adjacent filaments can be used. As the cross-sectional structure, a variety of twist structures such as single twist, layer twist, and multiple twist can be adopted, and a cord having a flat cross-sectional shape can be used. Further, a cord obtained by twisting filaments of different materials can also be adopted. The steel filament constituting the steel cord contains iron as a main component and may contain a variety of trace components such as carbon, manganese, silicon, phosphorus, sulfur, copper, and chromium. Brass plating may be applied to the surface of the steel filament in order to improve adhesion with rubber.

In the reinforcing member 1 of the present invention, the thickness of the core cord layer 2 is preferably from 1 to 3 mm, and more preferably from 1 to 2 mm. By setting the thickness of the core cord layer 2 within the above range, a core cord layer having sufficient compression rigidity can be applied, and at the same time, the winding radius R of a strip at the edge in the width direction of the core cord layer when the strip is wound around the core cord layer can be secured to some extent, and the winding performance of the strip material can be sufficiently secured. In general, the number of end counts of the core cord 2a in the core cord layer is preferably in the range of from 10 to 60 /50 mm. By setting the number of end counts in this range, a favorable prop effect can be obtained, but in the reinforcing member 1 of the present invention, the number is not limited to this range.

In the reinforcing member 1 of the present invention, as the rubber composition used for the coating rubber of the core cord layer 2 and the spiral cord layer 3, known rubber compositions can be used, and there is no particular limitation. For example, as a rubber component of a rubber composition used for coating rubber, other than natural rubber, all known rubber components such as synthetic rubber such as vinyl aromatic hydrocarbon/conjugated diene copolymer, polyisoprene rubber, butadiene rubber, butyl rubber, halogenated butyl rubber, and ethylene-propylene rubber can be used. One type of rubber component may be used alone, or two or more types may be used in combination. From a viewpoint of adhesion properties with metal cords and fracture characteristics of rubber compositions, preferably, the rubber component is composed of at least one of natural rubber and polyisoprene rubber, or contains 50% by mass or more of natural rubber and the balance of synthetic rubber.

In the reinforcing member 1 of the present invention, for the rubber composition used for the coating rubber, a filler such as carbon black or silica, a softener such as aroma oil, a methylene donor such as methoxymethylated melamine such as hexamethylenetetramine, pentamethoxymethylmelamine, or hexamethylenemethylmelamine, compounding agents commonly used in the rubber industry such as a vulcanization accelerator, a vulcanization acceleration aid, and an antiaging agent can be appropriately compounded in a common compounding amount. The method of preparing the rubber composition used as the coating rubber in the reinforcing member 1 of the present invention is not particularly limited, the rubber composition may be prepared by kneading sulfur, an organic acid cobalt salt, a variety of compounding agents and the like into the rubber components by using a Banbury mixer, a roll or the like according to a conventional method.

In the reinforcing member 1 of the present invention, it is preferable that the distance L between the core cord 2a at the edge in the width direction of the core cord layer 2 and the reinforcing cords 3a at the edges in the width direction of the spiral cord layer 3 is from 0.2 to 20 times the diameter of the core cord 2a of the core cord layer 2. By setting the distance L in the width direction between the reinforcing members of the cut end of the core cord 2a constituting the core cord layer 2 and the reinforcing cord 3a constituting the spiral cord layer 3 wound in a spiral shape to from 0.2 to 20 times the diameter of the core cord 2a forming the core cord layer 2, the deterioration of the durability performance due to the occurrence of cracks from the cut end of the core cord 2a can be suppressed while maintaining the effect of the core cord layer 2 as a prop. Since the rubber is sufficiently present between the core cord 2a and the reinforcing cord 3a, the rigidity in the width direction of the reinforcing member 1 can be further improved.

The reinforcing member 1 of the present invention can be suitably used as a tire reinforcing member for passenger cars, trucks/buses, construction vehicles, motorcycles, aircraft and agricultural equipment. The tire is not limited to pneumatic tires, but can also be used as a reinforcing member for solid tires or non-pneumatic tires. There is no particular limitation on the application site of the reinforcing member 1 of the present invention. For example, the reinforcing member 1 is preferably used as a belt covering most of a tread portion. As described above, the rigidity in the longitudinal direction of the reinforcing member 1 of the present invention is improved, and at the same time, the rigidity in the width direction is improved. Therefore, by using the reinforcing member 1 of the present invention as a belt, in addition to suppressing peeling between layers of the belt due to repetitive inputs and suppressing breakage of a cord by stepping on an obstacle on a road, due to a reduction in distortion of the groove bottom at the time of internal pressure, the cracks occurring in the groove bottom and the change over time can be suppressed, and thereby the wear rate and uneven wear of a tire can be suppressed.

In addition to for a belt, the reinforcing member 1 of the present invention may be used, for example, only for local reinforcement of a part of the tread. For example, it can also be used only for local reinforcement such as the vicinity of the tread edge, the vicinity of the equatorial plane, and the vicinity of the groove bottom. In addition to using the reinforcing member of the present invention alone, a plurality of reinforcing members may be arranged side by side in the tire width direction, or may be configured to cover the tread portion by spirally winding in the circumferential direction while shifting in the tire width direction.

Next, the tire of the present invention will be described.

The tire of the present invention comprises the reinforcing member 1 of the present invention, and examples of the tire include tires for passenger cars, trucks/buses, construction vehicles, motorcycles, aircraft, and agricultural equipment. Preferably, the tire of the present invention is a tire for passenger cars, trucks/buses, and construction vehicles. The tire of the present invention is not limited to pneumatic tires, but can also be solid tires or non-pneumatic tires.

The portion to which the reinforcing member 1 of the present invention is applied is not particularly limited, and as described above, for example, the reinforcing member 1 of the present invention is suitable as a belt covering most of the tread portion. By using the reinforcing member of the present invention as a belt, due to a reduction in distortion of the groove bottom at the time of internal pressure, cracks occurring in the groove bottom and change over time can be suppressed, and thereby the wear rate and uneven wear of the tire can be suppressed. Besides this, for example, the reinforcing member 1 of the present invention may be used only for local reinforcement of a portion of a tread, and for example, the reinforcing member 1 of the present invention can be used only for local reinforcement such as the vicinity of the tread edge, the vicinity of the equatorial plane, and the vicinity of the groove bottom. In addition to using the reinforcing member 1 singly, a plurality of reinforcing members 1 may be arranged in the tire width direction, or may be configured to cover a tread portion by spirally winding in the circumferential direction while shifting in the tire width direction.

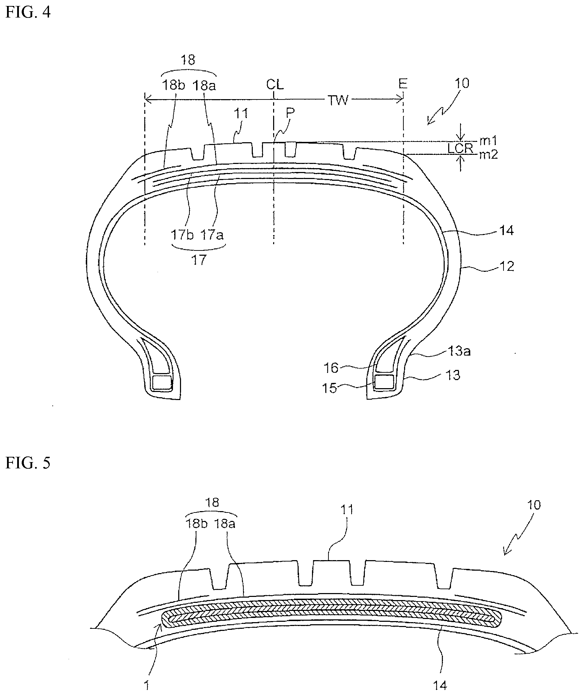

FIG. 4 is a cross-sectional view in the tire width direction showing one configuration example of a passenger car tire. The illustrated passenger car tire 10 comprises a tread portion 11 forming a ground contact portion, a pair of side wall portions 12 extending continuously inward in the tire radial direction on both side portions of the tread portion 11, and a bead portion 13 continuous to the inner peripheral side of each side wall portion 12. The tread portion 11, the side wall portion 12, and the bead portion 13 are reinforced by a carcass 14 composed of a single carcass ply extending toroidally from one bead portion 13 to the other bead portion 13. In the illustrated passenger car tire 10, bead cores 15 are embedded in a pair of bead portions 13, respectively, and the carcass 14 is turned up from the inside to the outside of the tire around the bead core 15 and locked.

In the passenger car tire 10 of the present invention, a variety of configurations including a conventional structure can be adopted for the carcass 14, and either a radial structure or a bias structure may be used. As the carcass 14, preferably, one or two carcass plies composed of an organic fiber cord layer may be used. For example, the maximum width position of the carcass 14 in the tire radial direction may be brought closer to the bead portion 13 side or closer to the tread portion 11 side. For example, the maximum width position of the carcass 14 can be provided outside in the tire radial direction from the bead base portion in the range of from 50% to 90% of the tire height. As shown in the drawing, the carcass 14 generally and preferably has a structure in which the carcass 14 extends without interruption between the pair of bead cores 15. The carcass 14 may be formed by using a pair of carcass ply pieces extending from the bead core 15 and being interrupted near the tread portion 11 (not illustrated).

A variety of structures can be adopted for the turn-up portion of the carcass 14. For example, the turn-up end of the carcass 14 can be positioned inside the upper end of the bead filler 16 in the tire radial direction, and the turn-up end of the carcass 14 may be extended to the outer side in the tire radial direction from the upper end of the bead filler 16 or the tire maximum width position. In this case, the turn-up end can also be extended to the inner side in the tire width direction from the end of the belt 17 in the tire width direction. When the carcass ply has a plurality of layers, the position of the turn-up end of the carcass 14 in the radial direction of the tire can be made different per layer. The carcass ply may have a structure in which the carcass 14 is sandwiched between a plurality of bead core members without a turn-up portion being present, and a structure in which the carcass is wound around the bead core 15 may be adopted. In general, the end count of the carcass 14 is within the range of from 10 to 60/50 mm, but the present invention is not limited thereto.

In the illustrated passenger car tire 10, a belt 17 composed of two layers of belt layers 17a and 17b is arranged on the outer side in the tire radial direction of the crown region of the carcass 14. In the present invention, the reinforcing member 1 can be arranged in place of the belt 17 composed of two layers of belt layers 17a and 17b. FIG. 5 is a partial sectional view in the tire width direction of a tread portion of a passenger car tire of the present invention. In the illustrated tire, three reinforcing layers in the reinforcing member 1 of the present invention are arranged in place of the two belt layers 17a and 17b. In other words, the spiral cord layer 3 of the reinforcing member 1 of the present invention is an intersecting belt layer in which cord layers forming a predetermined angle with respect to the tire circumferential direction intersect each other. The core cord layer 2 serves as a second belt layer.

The passenger car tire 10 of the present invention may further comprise other belt layers (not illustrated) in addition to the belt layer comprising the reinforcing member 1 of the present invention. The other belt layer is a rubberized layer of a reinforcing cord and can be an inclined belt forming a predetermined angle with respect to the tire circumferential direction. The other belt layers may be arranged on the outer side or on the inner side in the tire radial direction of the reinforcing member 1. As a reinforcing cord of an inclined belt layer, for example, a metal cord, particularly a steel cord is most commonly used, and an organic fiber cord may also be used. As the steel cord, one composed of a steel filament containing iron as a main component and containing a variety of trace amounts of carbon, manganese, silicon, phosphorus, sulfur, copper, chromium, and the like can be used.

As the steel cord, a steel monofilament cord may be used other than a cord obtained by twisting a plurality of filaments together. A variety of designs are possible for the twist structure of the steel cord, and a variety of cross-sectional structures, twist pitches, twist directions, and distances between adjacent steel cords can also be used. A cord obtained by twisting filaments of different materials may be adopted, and the cross-sectional structure is not particularly limited, and a variety of twisted structures such as single twisting, layer twisting, or double twisting can be employed. The inclination angle of the reinforcing cords of the other belt layers is preferably 10° or more with respect to the circumferential direction of a tire. When providing another belt layer, the width of the largest width inclined belt layer having the largest width is preferably from 90% to 115% of the tread width, and particularly preferably from 100% to 105%.

In the passenger car tire of the present invention, a belt reinforcing layer 18 may be provided on the outer side in the tire radial direction of the reinforcing member 1 of the present invention. Examples of the belt reinforcing layer 18 include a cap layer 18a arranged over the entire width of the reinforcing member 1 and a layered layer 18b arranged in a region covering both edges of the reinforcing member 1. The cap layer 18a and the layered layer 18b may be provided individually or in combination. Alternatively, a combination of two or more cap layers or two or more layered layers may be used.

As the reinforcing cords of the cap layer 18a and the layered layer 18b, a variety of materials can be adopted, and representative examples thereof include rayon, nylon, polyethylene naphthalate (PEN), polyethylene terephthalate (PET), aramid, glass fiber, carbon fiber, and steel. From a viewpoint of weight reduction, an organic fiber cord is particularly preferable. As the reinforcing cord, a monofilament cord, a cord obtained by twisting a plurality of filaments, and a hybrid cord obtained by twisting filaments of different materials can also be adopted. A corrugated cord may be used for the reinforcing cord to increase the breaking strength. Similarly, in order to increase the breaking strength, for example, a high elongation cord having an elongation at break of from 4.5 to 5.5% may be used.

When the cap layer 18a is provided on the passenger car tire 10 of the present invention, the width of the cap layer 18a may be wider or may be narrower than that of the inclined belt layer. For example, the width may be from 90% to 110% of the largest width inclined belt layer having the largest width among the inclined belt layers. Generally, the number of end counts of the cap layer and a layered layer is in the range of from 20 to 60 /50 mm, but is not limited to this range. For example, the cap layer 18a can have a distribution of rigidity, material, number of layers, end count density, or the like in the tire width direction, for example, the number of layers can be increased only in the edge in the tire width direction, while the number of layers can be increased only in the center portion.

From a viewpoint of manufacturing, it is particularly advantageous to form the cap layer 18a and the layered layer 18b as a spiral layer. In this case, a plurality of core wires arranged parallel to each other in a plane may be formed by a strip-like cord bundled by a wrapping wire while maintaining the parallel arrangement.

In the case of the narrow width and large diameter size, in the shape of the tread portion 11 of the passenger car tire 10 of the present invention, when a straight line that passes through a point P on the tread surface in the tire equatorial plane CL and is parallel to the tire width direction is defined as m1, a straight line that passes through a ground contact end E and is parallel to the tire width direction is defined as m2, the distance in the tire radial direction between the straight line m1 and the straight line m2 is defined as decreased hight LCR, and the tread width of the tire is defined as TW, the ratio LCR/TW is preferably 0.045 or less. By setting the ratio LCR/TW to the above range, the crown portion of the tire becomes flattened (planerized), the contact area is increased, the input (pressure) from a road surface is relaxed, the deflection rate in the tire radial direction can be reduced, and the durability and anti-abrasion performance of the tire can be improved. The tread edge is preferably smooth.

As the tread pattern, a full lug pattern, a rib-like land portion dominant pattern, a block pattern, or an asymmetric pattern may be used, and a rotation direction may be designated.

The full lug pattern may be a pattern having width direction grooves extending from the vicinity of the equatorial plane to the ground contact end in the tire width direction, and in this case, the circumferential direction groove may be not included. Such a pattern mainly composed of transverse grooves can effectively exert performance particularly on snow.

The rib-like land portion dominant pattern is a pattern mainly composed of a rib-like land portion, which is defined in the tire width direction by one or more circumferential direction grooves or by circumferential direction grooves and a tread edge. Here, the rib-like land portion refers to a land portion extending in the tire circumferential direction without having transverse grooves traversing in the tire width direction, and the rib-like land portion may have a transverse groove that terminates in a sipe or a rib-like land portion. A radial tire is considered to have a high ground contact pressure particularly under high internal pressure, and therefore, by increasing the shear rigidity in the circumferential direction, the ground contact on a wet road surface is considered to be improved. Example of the rib-like land portion dominant pattern include a tread pattern composed only of rib-like land portions in a region of 80% of the tread width centered on the equatorial plane, that is, a pattern without lateral grooves. Such a pattern contributes to the drainage performance in this region, particularly, to the wet performance.

The block pattern is a pattern having block land portions partitioned by circumferential direction grooves and width direction grooves, and the block pattern tire is excellent in basic on-ice performance and on-snow performance.

The asymmetric pattern is a pattern in which the left and right tread patterns are asymmetric with respect to the equatorial plane. For example, in the case of a tire for which the mounting direction is designated, a difference in the negative rate may be provided between the tire half portion on the inner side in the vehicle mounting direction and the tire half portion on the outer side in the vehicle mounting direction with respect to the equatorial plane as the boundary, and the number of the circumferential direction grooves may be different between the tire half portion on the inner side in the vehicle mounting direction and the tire half portion on the outer side in the vehicle mounting direction with respect to the equatorial plane as the boundary.

The tread rubber is not particularly limited, and conventionally used rubber may be used, and foamed rubber may also be used. The tread rubber may be formed of a plurality of different rubber layers in the tire radial direction, and for example, the tread rubber may have a so-called cap-base structure. As the plurality of rubber layers, those having different tangent loss, modulus, hardness, glass transition temperature, material and the like can be used. The ratio of the thickness of the plurality of rubber layers in the tire radial direction may be changed in the tire width direction, and only the circumferential direction groove bottom or the like may be a rubber layer different from the periphery thereof.

Further, the tread rubber may be formed of a plurality of different rubber layers in the tire width direction, or may be a so-called divided tread structure. As the plurality of rubber layers, those different in tangent loss, modulus, hardness, glass transition temperature, material, and the like can be used. The ratio of the lengths in the tire width direction of the plurality of rubber layers may be changed in the tire radial direction, or alternatively, only a limited region such as only in the vicinity of the circumferential direction groove, only in the vicinity of the tread edge, only in the shoulder land portion, or only in the center land portion can be formed as a rubber layer different from the circumference thereof.

In the passenger car tire 10 of the present invention, the structure of the side wall portion 12 can also adopt a known structure. For example, the tire maximum width position can be provided outside in the tire radial direction from the bead base portion in the range of from 50% to 90% of the tire height. The tire may have a structure having a rim guard. In the passenger car tire 10 of the present invention, a recessed portion 13a to make contact with the rim flange is preferably formed.

The bead core 15 can adopt a variety of structures such as a circular shape or a polygonal shape. As described above, in addition to the structure in which the carcass 14 is wound around the bead core 15, the bead portion 13 may have a structure in which the carcass 14 is sandwiched between a plurality of bead core members. In the illustrated passenger car tire 10, the bead filler 16 is arranged on the outside on the tire radial direction of the bead core 15, but in the passenger car tire 10 of the present invention, the bead filler 16 may be not provided.

Although not illustrated, the passenger car tire of the present invention may have an inner liner usually arranged on the innermost layer of the tire. The inner liner can be formed not only by a rubber layer mainly composed of butyl rubber but also by a film layer containing a resin as a main component. Although not illustrated, on the inner surface of the tire, a porous member can be arranged, or electrostatic flock implantation processing can be performed in order to reduce cavity resonance sound. Further, a sealant member for preventing leakage of air at the time of puncture can be provided on the inner surface of the tire.

The application of the passenger car tire 10 is not particularly limited. The tire can be applied to uses for summer, all season, and winter. The tire can also be used for a side reinforced runflat tire having a crescent-shaped reinforcing rubber layer in the side wall portion 12 or a passenger car tire having a special structure such as a stud tire.

Next, the truck/bus tire of the present invention will be described.

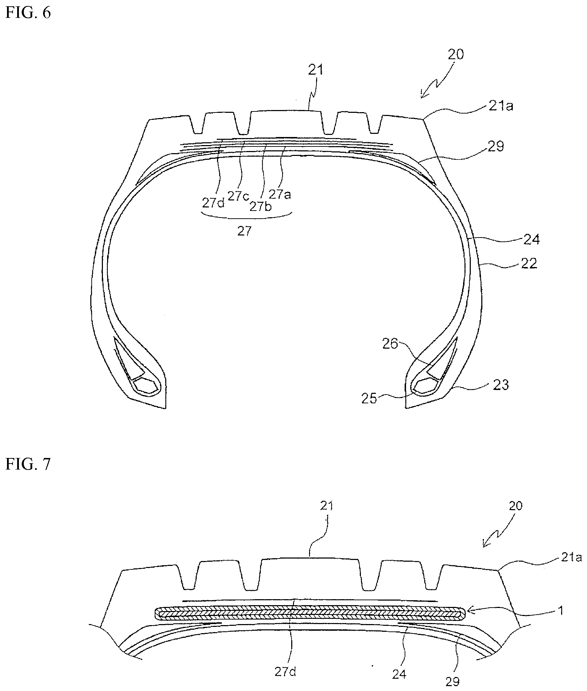

FIG. 6 is a sectional view in the tire width direction showing one configuration example of a truck/bus tire. The illustrated truck/bus tire 20 comprises a tread portion 21 forming a ground contact portion, a pair of side wall portions 22 extending continuously inward in the tire radial direction on both side portions of the tread portion 21, and a bead portion 23 continuous to the inner peripheral side of each side wall portion 22. The tread portion 21, the side wall portion 22, and the bead portion 23 are reinforced by a carcass 24 composed of a single carcass ply extending toroidally from one bead portion 23 to the other bead portion 23. In the illustrated truck/bus tire 20, bead cores 25 are embedded in a pair of bead portions 23, respectively, and the carcass 24 is turned up from the inside to the outside of the tire around the bead core 25 and locked.

In the truck/bus tire 20 of the present invention, a variety of configurations including a conventional structure can be adopted for the carcass 24, and either a radial structure or a bias structure may be used. As the carcass 24, one or two carcass plies composed of a steel cord layer are preferably used. For example, the maximum carcass width position in the tire radial direction may be brought closer to the bead portion 23 side or closer to the tread portion 21 side. For example, the maximum width position of the carcass 24 can be provided outside in the tire radial direction from the bead base portion in the range of from 50% to 90% of the tire height. As shown in the drawing, the carcass 24 generally and preferably has a structure in which the carcass 24 extends uninterruptedly between the pair of bead cores 25, the carcass 24 can also be formed by using a pair of carcass pieces extending from the bead core 25 and being interrupted near the tread portion 21.

Further, a variety of structures can be adopted for the turn-up portion of the carcass 24. For example, the turn-up end of the carcass 24 can be positioned inside the upper end of a bead filler 26 in the tire radial direction, and the turn-up end of the carcass may be extended to the outer side in the tire radial direction from the upper end of the bead filler 26 or the maximum width position of the tire. In this case, the turn-up end can also be extended to the inner side in the tire width direction from the end in the tire width direction of a belt 27. Further, when the carcass ply has a plurality of layers, the position of the turn-up end of the carcass 24 in the radial direction of the tire can be made different per layer. A structure in which the carcass 24 is sandwiched by a plurality of bead core members without the turn-up portion being present or a structure in which the carcass 24 is wound around the bead core 25 may be adopted. In general, the number of end counts of the carcass 24 is within a range of from 10 to 60/50 mm, but the present invention is not limited thereto.

In the illustrated truck/bus tire 20, the belt 27 composed of four belt layers 27a-27d is arranged on the outer side in the tire radial direction of the crown region of the carcass 24. In the truck/bus tire 20 of the present invention, the reinforcing member 1 can be arranged in place of the first to third belt layers 27a to 27c which are positioned inside among the four belt layers 27a to 27d in the tire radial direction. FIG. 7 is a partial sectional view in the tire width direction of the tread portion of the truck/bus tire of the present invention. In other words, the spiral cord layer 3 of the reinforcing member 1 of the present invention is the first belt layer 27a and the third belt layer 27c, and these are intersecting belts in which cord layers forming a predetermined angle with respect to the tire circumferential direction intersect each other. The core cord layer 2 is the second belt layer 27b.

In the truck/bus tire 20 of the present invention, as shown in the drawing, in addition to the belt layer composed of the reinforcing member of the present invention, another belt layer (a fourth belt layer 27d in the illustrated example) may be provided. The other belt layer is a rubberized layer of a reinforcing cord, and can be an inclined belt forming a predetermined angle with respect to the tire circumferential direction. As a reinforcing cord of an inclined belt layer, for example, a metal cord, particularly a steel cord is most commonly used, and an organic fiber cord may also be used. As the steel cord, one composed of a steel filament containing iron as a main component and containing a variety of trace amounts of carbon, manganese, silicon, phosphorus, sulfur, copper, chromium, and the like can be used.

As the steel cord, a steel monofilament cord may be used other than a cord obtained by twisting a plurality of filaments together. A variety of designs are possible for the twist structure of the steel cord, and a variety of cross-sectional structures, twist pitches, twist directions, and distances between adjacent steel cords can also be used. A cord obtained by twisting filaments of different materials may be adopted, and the cross-sectional structure is not particularly limited, and a variety of twisted structures such as single twisting, layer twisting, or double twisting can be employed. The inclination angle of the reinforcing cords of the other belt layers is preferably 0° or more with respect to the circumferential direction of a tire. When providing another belt layer, the width of the largest width inclined belt layer having the largest width is preferably from 40% to 115% of the tread width, and particularly preferably from 50% to 70%. A belt under cushion rubber 29 is preferably provided on the inner side in the tire radial direction of the edge of the belt 27. The distortion/temperature of the edge of the belt 27 can thus be reduced, thereby improving the tire durability.

In the truck/bus tire 20 of the present invention, a circumferential cord layer (not illustrated) may be provided on the outer side in the tire radial direction of the reinforcing member 1 and the other belt layer 27d of the present invention.

In the truck/bus tire 20 of the present invention, the structure of the side wall portion 22 can also adopt a known structure. For example, the tire maximum width position can be provided outside in the tire radial direction from the bead base portion in the range of from 50% to 90% of the tire height. In the truck/bus tire 20 of the present invention, unlike a passenger car tire, preferably, the tire is formed as a smooth curve convex in the tire width direction without forming a recessed portion that makes contact with a rim flange.

The bead core 25 can adopt a variety of structures such as a circular shape or a polygonal shape. As described above, in addition to the structure in which the carcass 24 is wound around the bead core 25, the bead portion 23 may have a structure in which the carcass 24 is sandwiched between a plurality of bead core members. In the illustrated truck/bus tire 20, the bead filler 26 is arranged outside the bead core 25 in the tire radial direction, and the bead filler 26 may be composed of a plurality of rubber members separated in the tire radial direction.

In the truck/bus tire 20 of the present invention, as the tread pattern, a rib-like land portion dominant pattern, a block pattern, or an asymmetric pattern may be used, and a rotation direction may be designated.

The rib-like land portion dominant pattern is a pattern mainly composed of a rib-like land portion, which is defined in the tire width direction by one or more circumferential direction grooves or by circumferential direction grooves and a tread edge. Here, the rib-like land portion refers to a land portion extending in the tire circumferential direction without having transverse grooves traversing in the tire width direction, and the rib-like land portion may have a transverse groove that terminates in a sipe or a rib-like land portion. A radial tire is considered to have a high ground contact pressure particularly under high internal pressure, and therefore, by increasing the shear rigidity in the circumferential direction, the ground contact on a wet road surface is considered to be improved. Example of the rib-like land portion dominant pattern include a tread pattern composed only of rib-like land portions in a region of 80% of the tread width centered on the equatorial plane, that is, a pattern without lateral grooves. Such a pattern contributes to the drainage performance in this region, particularly, to the wet performance.

The block pattern is a pattern having block land portions partitioned by circumferential direction grooves and width direction grooves, and the block pattern tire is excellent in basic on-ice performance and on-snow performance.

The asymmetric pattern is a pattern in which the left and right tread patterns are asymmetric with respect to the equatorial plane. For example, in the case of a tire for which the mounting direction is designated, a difference in the negative rate may be provided between the tire half portion on the inner side in the vehicle mounting direction and the tire half portion on the outer side in the vehicle mounting direction with respect to the equatorial plane as the boundary, and the number of the circumferential direction grooves may be different between the tire half portion on the inner side in the vehicle mounting direction and the tire half portion on the outer side in the vehicle mounting direction with respect to the equatorial plane as the boundary.

The tread rubber is not particularly limited, and conventionally used rubber may be used. The tread rubber may be formed of a plurality of different rubber layers in the tire radial direction, and for example, the tread rubber may have a so-called cap-base structure. As the plurality of rubber layers, those having different tangent loss, modulus, hardness, glass transition temperature, material and the like can be used. The ratio of the thickness of the plurality of rubber layers in the tire radial direction may be changed in the tire width direction, and only the circumferential direction groove bottom or the like may be a rubber layer different from the periphery thereof.

Further, the tread rubber may be formed of a plurality of different rubber layers in the tire width direction, or may be a so-called divided tread structure. As the plurality of rubber layers, those different in tangent loss, modulus, hardness, glass transition temperature, material, and the like can be used. The ratio of the lengths in the tire width direction of the plurality of rubber layers may be changed in the tire radial direction, or alternatively, only a limited region such as only in the vicinity of the circumferential direction groove, only in the vicinity of the tread edge, only in the shoulder land portion, or only in the center land portion can be formed as a rubber layer different from the circumference thereof. In the tread portion, preferably a corner portion 21a is formed at an egde in the tire width direction.

Next, the construction vehicle tire of the present invention will be described.

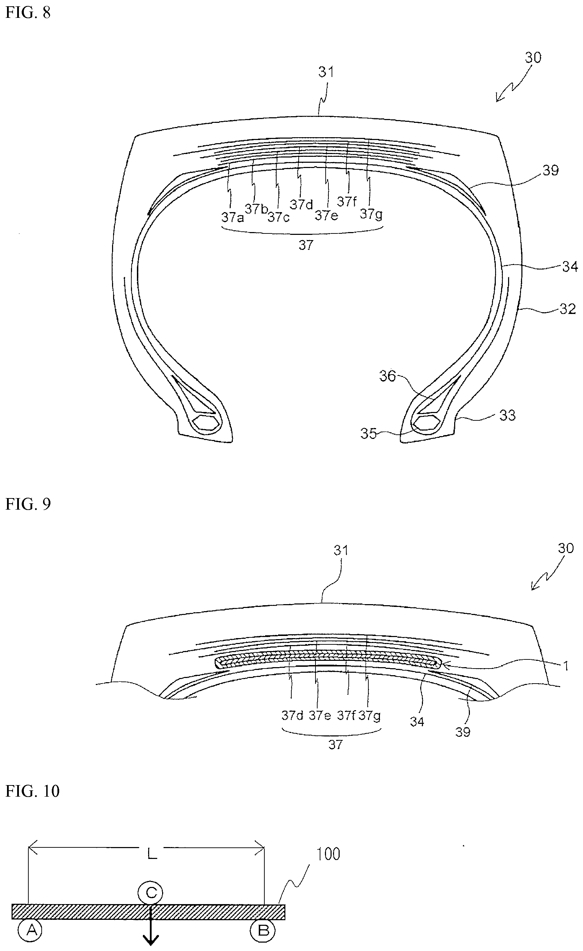

FIG. 8 is a sectional view in the tire width direction showing one configuration example of a construction vehicle tire. The illustrated construction vehicle tire 30 comprises a tread portion 31 forming a ground contact portion, a pair of side wall portions 32 extending continuously inward in the tire radial direction on both side portions of the tread portion 31, and a bead portion 33 continuous to the inner peripheral side of each side wall portion 32. The tread portion 31, the side wall portion 32, and the bead portion 33 are reinforced by a carcass 34 composed of a single carcass ply extending toroidally from one bead portion 33 to the other bead portion 33. In the illustrated construction vehicle tire 30, bead cores 35 are embedded in a pair of bead portions 33, respectively, and the carcass 34 is turned up from the inside to the outside of the tire around the bead core 35 and locked.

In the construction vehicle tire of the present invention, a variety of configurations including a conventional structure can be adopted for the carcass 34, and either a radial structure or a bias structure may be used. As the carcass 34, one or two carcass plies composed of a steel cord layer are preferably used. For example, the maximum carcass width position in the tire radial direction may be brought closer to the bead portion 33 side or closer to the tread portion 31 side. For example, the maximum width position of the carcass 34 can be provided outside in the tire radial direction from the bead base portion in the range of from 50% to 90% of the tire height. As shown in the drawing, the carcass 34 generally has a structure in which the carcass 34 extends uninterruptedly between the pair of bead cores 35, the carcass 34 can also be formed by using a pair of carcass pieces extending from the bead core 35 and being interrupted near the tread portion 31.

Further, a variety of structures can be adopted for the turn-up portion of the carcass 34. For example, the turn-up end of the carcass 34 can be positioned inside the upper end of a bead filler 36 in the tire radial direction, and the turn-up end of the carcass 34 may be extended to the outer side in the tire radial direction from the upper end of the bead filler 36 or the maximum width position of the tire. In this case, the turn-up end can also be extended to the inner side in the tire width direction from the end in the tire width direction of a belt 37. Further, when the carcass ply has a plurality of layers, the position of the turn-up end of the carcass 34 in the radial direction of the tire can be made different. A structure in which the carcass 34 is sandwiched by a plurality of bead core members without the turn-up portion being present or a structure in which the carcass 34 is wound around the bead core 35 may be adopted. In general, the number of end counts of the carcass 34 is within a range of from 10 to 60/50 mm, but the present invention is not limited thereto.

In the illustrated construction vehicle tire 30, the belt 37 composed of seven belt layers 37a-37g is arranged outside in the tire radial direction of the crown region of the carcass 34. Generally, a construction vehicle tire is composed of four or six belt layers, and when the tire is composed of six belt layers, the first belt layer and the second belt layer form an inner intersecting belt layer group, the third belt layer and the fourth belt layer form an intermediate intersecting belt layer group, and the fifth belt layer and the sixth belt layer form an outer intersecting belt layer group. In the construction vehicle tire of the present invention, at least one of the inner intersecting belt layer group, the intermediate intersecting belt layer group, and the outer intersecting belt layer group is replaced with the reinforcing member of the present invention.

In the tread width direction, the width of the inner intersecting belt layer group can be set to from 25% to 70% of the width of the tread surface, the width of the intermediate intersecting belt layer group can be set to from 55% to 90% of the width of the tread surface, and the width of the outer intersecting belt layer group can be set to from 60% to 110% of the width of the tread surface. In the tread surface view, the inclination angle of the belt cord of the inner intersecting belt layer group with respect to the carcass cord can be set to 70° or more and 85° or less, the inclination angle of the belt cord of the intermediate intersecting belt layer group with respect to the carcass cord can be set to from 50° to 75°, and the inclination angle of the belt cord of the outer intersecting belt layer group with respect to the carcass cord can be set to from 70° to 85°.

FIG. 9 is a partial cross-sectional view in the tire width direction of the tread portion of the construction vehicle tire of the present invention. In the illustrated construction vehicle tire 30, the reinforcing member 1 of the present invention is arranged in place of the first to third belt layers 37a to 37c constituting the inner intersecting belt layer group. In other words, the spiral cord layer 3 of the reinforcing member 1 of the present invention is the first belt layer 37a and the third belt layer 37c, and these are intersecting belts in which cord layers forming a predetermined angle with respect to the tire circumferential direction intersect each other. The core cord layer 2 is the second belt layer 37b. In the illustrated example, the inner intersecting belt layer group is replaced with the reinforcing member 1 of the present invention, but the construction vehicle tire of the present invention is not limited thereto. The intermediate intersecting belt layer group may be replaced with the reinforcing member 1 of the present invention, and the outer intersecting belt layer group may be replaced with the reinforcing member 1 of the present invention. In the case of a construction vehicle tire composed of four belt layers, the first belt layer and the second belt layer are replaced with the reinforcing member of the present invention, or the third belt layer and the fourth belt layer may be replaced with the reinforcing member of the present invention.

In the construction vehicle tire 30 of the present invention, as shown in the drawing, in addition to the belt layer composed of the reinforcing member 1 of the present invention, other belt layers (fourth to seventh belt layers) may be provided. The other belt layer is a rubberized layer of a reinforcing cord, and can be an inclined belt forming a predetermined angle with respect to the tire circumferential direction. As a reinforcing cord of an inclined belt layer, for example, a metal cord, particularly a steel cord is most commonly used, and an organic fiber cord may also be used. As the steel cord, one composed of a steel filament containing iron as a main component and containing a variety of trace amounts of carbon, manganese, silicon, phosphorus, sulfur, copper, chromium, and the like can be used.

As the steel cord, a steel monofilament cord may be used other than a cord obtained by twisting a plurality of filaments together. A variety of designs are possible for the twist structure of the steel cord, and a variety of cross-sectional structures, twist pitches, twist directions, and distances between adjacent steel cords can also be used. A cord obtained by twisting filaments of different materials may be adopted, and the cross-sectional structure is not particularly limited, and a variety of twisted structures such as single twisting, layer twisting, or double twisting can be employed. The inclination angle of the reinforcing cords of the other belt layers is preferably 10° or more with respect to the circumferential direction of a tire. When providing another belt layer, the width of the largest width inclined belt layer having the largest width is preferably from 90% to 115% of the tread width, and particularly preferably from 100% to 105%. A belt under cushion rubber 39 is preferably provided on the inner side in the tire radial direction of the edge of the belt 37. The distortion/temperature of the edge of the belt 37 can thus be reduced, thereby improving the tire durability.

In the construction vehicle tire 30 of the present invention, the structure of the side wall portion 32 can also adopt a known structure. For example, the tire maximum width position can be provided outside in the tire radial direction from the bead base portion in the range of from 50% to 90% of the tire height. In the construction vehicle tire 30 of the present invention, preferably, a recessed portion that makes contact with a rim flange is formed.

The bead core 35 can adopt a variety of structures such as a circular shape or a polygonal shape. As described above, in addition to the structure in which the carcass 34 is wound around the bead core 35, the bead portion 33 may have a structure in which the carcass 34 is sandwiched between a plurality of bead core members. In the illustrated construction vehicle tire 30, the bead filler 36 is arranged outside the bead core 35 in the tire radial direction, and the bead filler 36 may be composed of a plurality of rubber members separated in the tire radial direction.

In the construction vehicle tire 30 of the present invention, as the tread pattern, a lug pattern, a block pattern, or an asymmetric pattern may be used, and a rotation direction may be designated.

As the lag pattern, a pattern having a width direction groove extending in the tire width direction from the vicinity of the equatorial plane to the ground contact end may be used, and in this case, the circumferential direction groove may be not included.

The block pattern is a pattern having a block land portion partitioned by a circumferential direction groove and a width direction groove. Particularly in the case a construction vehicle of tire, a block is preferably large from a viewpoint of durability, and for example, the width of the block measured in the tire width direction is preferably from 25% to 50% of the tread width.

The asymmetric pattern is a pattern in which the left and right tread patterns are asymmetric with respect to the equatorial plane. For example, in the case of a tire for which the mounting direction is designated, a difference in the negative rate may be provided between the tire half portion on the inner side in the vehicle mounting direction and the tire half portion on the outer side in the vehicle mounting direction with respect to the equatorial plane as the boundary, and the number of the circumferential direction grooves may be different between the tire half portion on the inner side in the vehicle mounting direction and the tire half portion on the outer side in the vehicle mounting direction with respect to the equatorial plane as the boundary.

The tread rubber is not particularly limited, and conventionally used rubber may be used. The tread rubber may be formed of a plurality of different rubber layers in the tire radial direction, and for example, the tread rubber may have a so-called cap-base structure. As the plurality of rubber layers, those having different tangent loss, modulus, hardness, glass transition temperature, material and the like can be used. The ratio of the thickness of the plurality of rubber layers in the tire radial direction may be changed in the tire width direction, and only the circumferential direction groove bottom or the like may be a rubber layer different from the periphery thereof.

Further, the tread rubber may be formed of a plurality of rubber layers different in the tire width direction, or may be a so-called divided tread structure. As the plurality of rubber layers, those different in tangent loss, modulus, hardness, glass transition temperature, material, and the like can be used. The ratio of the lengths in the tire width direction of the plurality of rubber layers may be changed in the tire radial direction, or alternatively, only a limited region such as only in the vicinity of the circumferential direction groove, only in the vicinity of the tread edge, only in the shoulder land portion, or only in the center land portion can be formed as a rubber layer different from the circumference thereof.

In the construction vehicle tire 30, the rubber gauge of the tread portion 31 is preferably thicker from a viewpoint of durability, and is preferably from 1.5% to 4% of the outer diameter of the tire, and more preferably from 2% to 3%. The ratio (negative rate) of the groove area of the tread portion 31 to the ground contact surface is preferably 20% or less. This is because the construction vehicle tire 30 is mainly used at a low speed and in a dry area, it is not necessary to increase the negative rate for drainage performance. For example, the tire size of a construction vehicle tire has a rim diameter of 20 inches or more, and particularly in the case of a large construction vehicle tire, the rim diameter is 40 inches or more.

### EXAMPLES

Hereinafter, the present invention will be described in more detail by way of Examples.

According to conditions shown in the following Table, a rubber-cord composite of each Example and Comparative Example was prepared by aligning six reinforcing cords composed of a carbon fiber cord (PAN carbon fiber, specific gravity of 1.74) in parallel and coating with rubber.

The rubber-cord composite was spirally wound around one core cord layer to form a spiral cord layer, whereby reinforcing members of Examples and Comparative Examples were prepared. As the core cord of the core cord layer, a steel cord having a 1×3 structure composed of a steel filament having a wire diameter of 0.33 mm was used. The number of end counts of the core cord in the core cord layer was 25/50 mm, the inclination angle of the core cord layer with respect to the longitudinal direction was 50°, and the thickness of the core cord layer was 2 mm. Further, the inclination angle of the reinforcing cord of the spiral cord layer with respect to the longitudinal direction of the core cord layer was 16°.

For each obtained reinforcing member, tensile rigidity in the longitudinal direction, durability performance, and cord winding workability were evaluated by the following procedure. The results are listed on the following table in combination.

### < Tensile Rigidity >

The tensile rigidity was measured by chucking the prepared reinforcing member on a tensile tester in such a way that the longitudinal direction was in the tensile axis direction, pulling the member at a speed of 10 mm/min, and measuring the displacement with a center distance between the upper and lower chucks of 50 mm. The obtained results were expressed by an index with Comparative Example 1 as 100. The larger the value, the greater the tensile rigidity.

### < Durability Performance >

Evaluation of durability performance was carried out as follows.

Each of the reinforcing members of Example and Comparative Example was arranged in place of a belt composed of two belt layers to prepare a passenger car tire as shown in FIG. 4 with a tire size of 275/80R22.5. Each of the obtained test tires was assembled in an applicable rim, and allowed to travel 50,000 km under a prescribed inner pressure and a prescribed load at a speed of 80 km/h, and then, a reinforcing cord was taken out from the tire and the strength retention rate was measured. The obtained results were expressed by an index with Comparative Example 1 as 100. The larger the value, the higher the durability performance.

Here, the "applied rim" means a rim prescribed in the following standard according to the size of the tire. The "prescribed internal pressure" refers to the air pressure defined in accordance with the maximum load capacity in the following standard and the "prescribed load" means the maximum mass that can be loaded on a tire under the following standard. The standard refers to an industrial standard that is effective for the area where the tire is produced or used. For example, in the United States, the standard refers to "YEAR BOOK of THE TIRE AND RIM ASSOCIATION INC.", in Europe, the standard refers to "STANDARDS MANUAL of THE European Tire and Rim Technical Organisation", and in Japan, the standard refers to "JATMA YEAR BOOK" of THE Japan Automobile Tyre Manufacturers Association, Inc.

### < Cord Winding Workability >

Evaluation of the cord winding workability was carried out as follows.

A strip was wound around a core cord layer and an edge was crimped with a stitcher, and the rubber adhesion and a void between the core cord layer and the strip were checked. When winding was possible without any gaps, the cord winding workability was evaluated as ○, when gaps of 1 mm or less occurred, evaluated as Δ, and when gaps exceeding 1 mm occurred, evaluated as ×.

The bending stress (stiffness) per 50 mm width of an unvulcanized rubber-cord composite was measured by a three-point bending test in accordance with JIS K7074 as follows.

Specifically, first, as shown in FIG. 10, each unvulcanized rubber-cord composite sample 100 was placed on two jigs A and B arranged at intervals of L = 60 mm in a state where the ends were not fixed. The cord direction was set to be parallel with the two jigs A and B. Next, a bending input was applied by lowering a weight C at the center portion in the longitudinal direction of the rubber-cord composite sample 100 at a speed of 10 mm/min. The maximum exertion stress when the weight C was lowered by 15 cm which was measured after the sample began to exert stress was taken as the value of the bending stress.

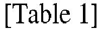

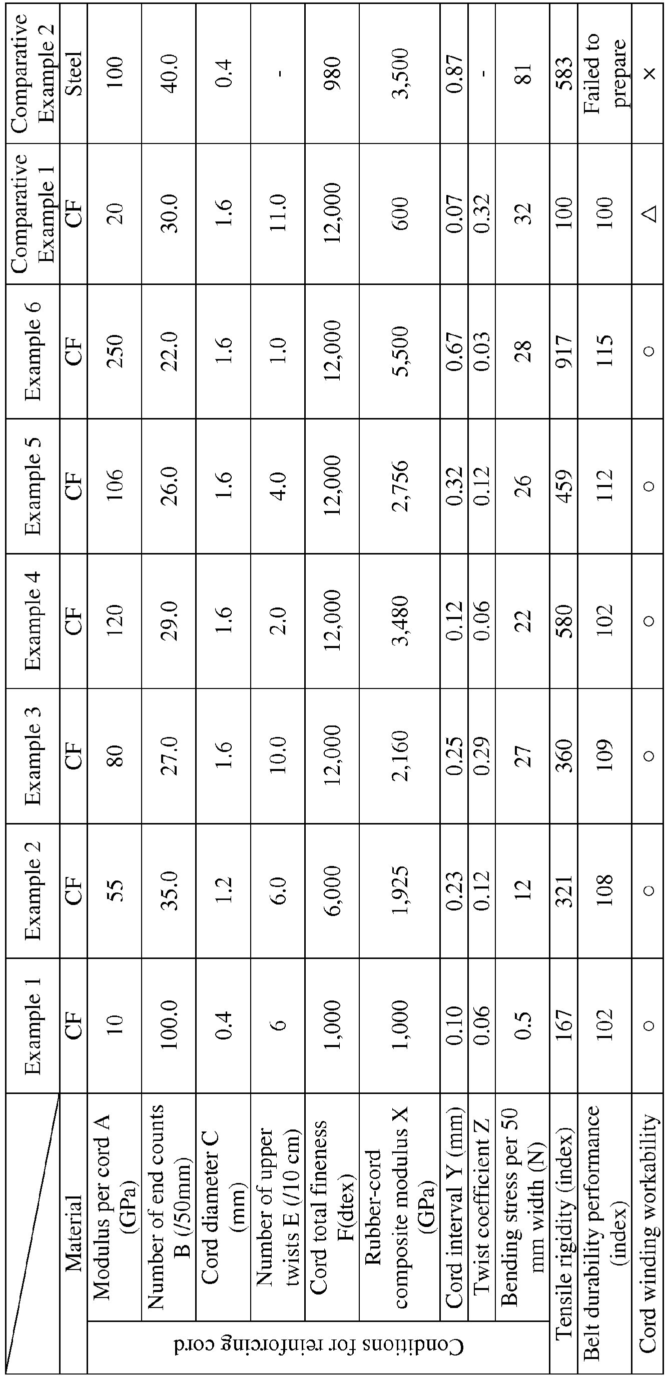

As shown in the above Table, according to the present invention, it was confirmed that a rubber-cord composite, a tire reinforcing member, and a tire using the same, which can further improve the strength and modulus of an entire belt layer without causing a problem caused by the reinforcing cord and can further improve the durability of the tire than before can be provided.

### DESCRIPTION OF SYMBOLS

- 1: tire reinforcing member (reinforcing member)
- 2: core cord layer
- 2a: core cord
- 3: spiral cord layer
- 3a: reinforcing cord
- 10: passenger car tire
- 11, 21, 31: tread portion
- 12, 22, 32: side wall portion
- 13, 23, 33: bead portion
- 13a: recessed portion
- 14, 24, 34: carcass
- 15, 25, 35: bead core
- 16, 26, 36: bead filler
- 17, 27, 37: belt
- 17a, 17b, 27a to 27d, 37a to 37g: belt layer
- 18: belt reinforcing layer
- 18a: cap layer
- 18b: layered layer
- 20: truck/bus tire
- 21a: corner portion
- 29, 39: belt under cushion rubber
- 30: construction vehicle tire
- 100: rubber-cord composite sample

## Claims

1. A rubber-cord composite used for a spiral cord layer in a tire reinforcing member comprising at least one core cord layer and the spiral cord layer including a reinforcing cord spirally wound around the core cord layer, **characterized in that**
one or a plurality of the reinforcing cords are aligned in parallel and covered with rubber,
the reinforcing cord includes a nonmetallic fiber,
when the modulus per cord of the reinforcing cord is A (GPa), the number of cord end counts per 50 mm width of the rubber-cord composite is B (/50 mm), the thickness of the reinforcing cord is C (mm), the specific gravity of the reinforcing cord is D (g/cm³), the number of upper twists of the reinforcing cord is E (times/10 cm), and the total fineness of the reinforcing cord is F (dtex),
the modulus X per 50 mm width of the rubber-cord composite represented by X = A × B is 1,000 GPa or more,
a cord interval Y between the adjacent reinforcing cords in the rubber-cord composite in a direction perpendicular to the cord longitudinal direction represented by Y = (50 - B × C) / B is from 0.1 mm to 5 mm, and
the twist coefficient Z of the reinforcing cord represented by Z = tan θ = E × √ (0.125 × F / D) / 1,000 is 0.3 or less.

2. The rubber-cord composite according to claim 1, wherein the total fineness F of the reinforcing cord is from 1,000 dtex to 30,000 dtex.

3. The rubber-cord composite according to claim 2, wherein the total fineness F of the reinforcing cord is from 5,000 dtex to 30,000 dtex.

4. The rubber-cord composite according to claim 3, wherein the total fineness F of the reinforcing cord is from 9,000 dtex to 30,000 dtex.

5. The rubber-cord composite according to any one of claims 1 to 4, wherein the nonmetallic fiber is one or more selected from aramid fiber, polyketone fiber, polyparaphenylene benzobisoxazole fiber, polyarylate fiber, basalt fiber, carbon fiber, and glass fiber.

6. The rubber-cord composite according to claim 5, wherein the nonmetallic fiber is one or both of carbon fiber and glass fiber.

7. The rubber-cord composite according to any one of claims 1 to 6, wherein the modulus X is from 2,000 GPa to 6,000 GPa.

8. The rubber-cord composite according to any one of claims 1 to 7, wherein the bending stress per 50 mm width of an unvulcanized rubber-cord composite measured by a three-point bending test in accordance with JIS K7074 is from 0.1 N to 80 N.

9. A tire reinforcing member comprising at least one core cord layer and a spiral cord layer including a reinforcing cord wound spirally around the core cord layer, **characterized in that**
the spiral cord layer is formed using the rubber-cord composite according to any one of claims 1 to 8.

10. The tire reinforcing member according to claim 9, wherein the core cord of the core cord layer is composed of a metal cord, and the core cord has an inclination angle of from 40 to 90° with respect to the longitudinal direction of the core cord layer.

11. The tire reinforcing member according to claim 9 or 10, wherein the thickness of the core cord layer is from 1 to 3 mm.

12. A tire **characterized in that** the tire reinforcing member according to any one of claims 9 to 11 is used.
